# EUROPÄISCHE PATENTSCHRIFT

(11) **EP 0 696 676 B1**
(45) Veröffentlichungstag und Bekanntmachung des Hinweises auf die Patenterteilung: **21.01.1998**
(21) Anmeldenummer: 95107820.3
(22) Anmeldetag: 23.05.1995
(51) Int. Cl.: F01N 3/20, B01D 53/56, F02D 41/40

(54) **Abgasreinigungssystem**
Exhaust gas cleaning system
Système d'épuration de gaz d'échappement

(30) Priorität: 15.07.1994 DE 4425018
(43) Veröffentlichungstag der Anmeldung: 14.02.1996
(73) Patentinhaber: DAIMLER-BENZ AKTIENGESELLSCHAFT, 70567 Stuttgart (DE)
(72) Erfinder: Fränkle, Gerhard, Dr., D-73630 Remshalden (DE)

(56) Entgegenhaltungen:
- EP-A- 0 364 694
- EP-A- 0 558 452
- FR-A- 1 260 971
- MARINE ENGINEERS REVIEW, Februar 1991 LONDON GB, Seiten 10-14, XP 000176924 'Reducing NOx emissions from low-speed engines '

## Beschreibung

Die Erfindung betrifft ein Abgasreinigungssystem und ein Verfahren zur Reinigung der Abgase für einen mittels einer Motorelektronik regelbaren Dieselmotor, mit einer Einrichtung zur Nachbehandlung der Abgase mit Hilfe einer Zugabevorrichtung von Reduktionsmittel, das in einem Speichertank gespeichert ist.

Zur Reduzierung von Stickoxyden in Abgasen eines Fahrzeugdieselmotors ist es bekannt, den Abgasen vor einem Katalysator Ammoniak zuzugeben, wobei zur Erkennung der Füllstandsgrenzen im Katalysator zwei Ammoniaksensoren vorgesehen sind (DE 42 17 552 C1). Mittels dieser Sensoren erfolgt die Steuerung der Zugabe von Ammoniak aus einem Speichertank, indem die Ammoniakkonzentration im Katalysator gemessen wird. Die Reinigung der Abgase erfolgt daher durch eine Nachbehandlung in Form einer Zugabe von Ammoniak als Reduktionsmittel.

Aus der DE 40 03 515 A1 ist es bekannt, in Abgasen eines Fahrzeugdieselmotors enthaltene Stickoxyde durch die Zugabe eines Reduktionsmittels Harnstoff zu reduzieren. Dieses Verfahren wird in Strömungsrichtung der Abgase vor einem zeolithhaltigen Katalysator durchgeführt.

Aufgabe der Erfindung ist es, ein Abgasreinigungssystem der eingangs genannten Art zu schaffen, das auch bei einem Ausfall der Nachbehandlungseinrichtung keine unzulässig hohen Stickoxydemissionen aufweist.

Diese Aufgabe wird dadurch gelöst, daß Mittel zum Erfassen des Füllstandes des Speichertankes vorgesehen sind, die an eine Steuereinrichtung angeschlossen sind, die bei leerem Speichertank die Regelung der Motorelektronik derart ändert, daß eine späte Kraftstoffeinspritzung erfolgt. Die späte Kraftstoffeinspritzung vermindert die Stickoxydemission, auch wenn dadurch der Kraftstoffverbrauch erhöht wird. Durch den unverbrannten Kraftstoff ergibt sich zwar eine erhöhte Kohlenwasserstoffemission, die jedoch durch die bei Dieselmotoren üblichen Edelmetallkatalysatoren in ausreichender Weise reduzierbar ist. Da die Kraftstoffeinspritzung durch eine Motorelektronik geregelt ist, wird in einfacher Weise bei leerem Speichertank die Regelung der Motorelektronik derart umgeschaltet, daß die Kraftstoffeinspritzung jeweils entsprechend verspätet erfolgt. Sobald der Fahrer des Fahrzeugs den erhöhten Kraftstoffverbrauch erkennt, wird er den Speichertank erneut mit Reduktionsmittel auffüllen, wodurch die Steuereinrichtung die Motorelektronik wieder auf normale Kraftstoffeinspritzung umstellt.

In Ausgestaltung der Erfindung ist eine Sichtanzeige zum Erkennen eines leeren Speichertanks vorgesehen. Diese Sichtanzeige befindet sich zweckmäßig im Bereich der Armaturentafel des Kraftfahrzeugs, so daß der Fahrer des Kraftfahrzeugs den Nachfüllbedarf des Speichertanks schnell erkennen kann.

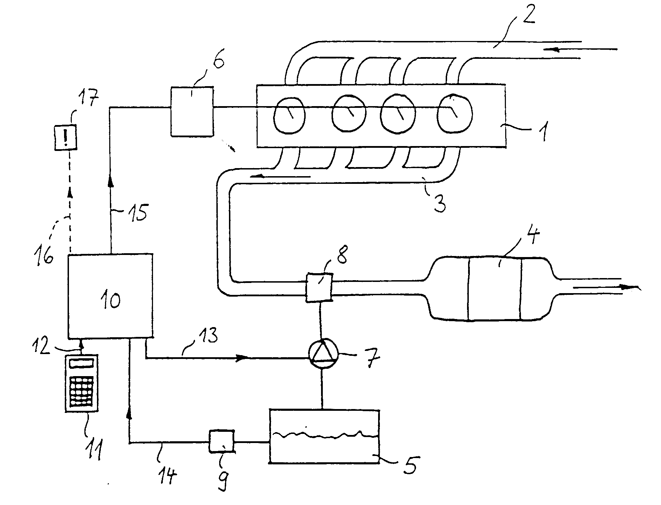

Weitere Vorteile und Merkmale der Erfindung ergeben sich aus den Unteransprüchen sowie aus der nachfolgenden Beschreibung eines Ausführungsbeispiels der Erfindung, das anhand der Zeichnung dargestellt ist.
Die einzige Zeichnung zeigt eine Ausführungsform eines erfindungsgemäßen Abgasreinigungssystems, das mit einer Nachbehandlungseinrichtung zur Reduzierung von Stickoxyden im Abgas versehen ist.

Ein Dieselverbrennungsmotor (1) ist Teil eines nicht dargestellten Kraftfahrzeugs und weist eine Ansaugleitung (2) auf. Der Dieselverbrennungsmotor (1) ist außerdem mit einer Abgasanlage (3) versehen, in deren weiteren Verlauf ein Katalysator (4) angeordnet ist. Die Kraftstoffzufuhr zu dem Dieselverbrennungsmotor (1) erfolgt durch eine Motorelektronikregelung (6), die eine gezielte Kraftstoffeinspritzung bewirkt.

Um die Konzentration von Stickoxyden im Abgasstrom der Abgasanlage (3) zu reduzieren, ist in Strömungsrichtung vor dem Katalysator (4) eine Nachbehandlungseinrichtung (5, 7, 8) vorgesehen, die einen Speichertank (5) zur Speicherung eines Reduktionsmittels, beim Ausführungsbeispiel Harnstoff, aufweist. In gleicher Weise ist als Reduktionsmittel auch Ammoniak einsetzbar. Das Reduktionsmittel wird aus dem Speichertank (5) mittels einer Pumpeinrichtung (7) einer Zugabeeinheit (8) zugeführt, die das Reduktionsmittel mit dem Abgasstrom in der Abgasanlage (3) mischt. Die Steuerung der Zugabe von Reduktionsmittel erfolgt mittels einer Steuerleitung (13), die an die Pumpeinrichtung (7) angeschlossen ist und von einer zentralen Steuereinheit (10) ausgeht. Die Fördermenge der Pumpeinrichtung (7) wird durch die zentrale Steuereinheit (10) mit Hilfe verschiedener gespeicherter Daten aus einem Datenspeicher (11) gesteuert, die der zentralen Steuereinheit (10) mittels einer Speiseleitung (12) zugespeist werden.

Sobald eine Förderung durch die Pumpeinrichtung (7) nicht mehr möglich ist, da im Speichertank (5) kein Reduktionsmittel mehr vorhanden ist, schaltet die zentrale Steuereinheit (10) die Motorelektronikregelung (6) derart um, daß die Kraftstoffeinspritzung in den Dieselverbrennungsmotor (1) verspätet erfolgt. Dadurch erfolgt eine innermotorische Verminderung der Stickoxydemmission, gleichzeitig jedoch eine Erhöhung des Kraftstoffverbrauchs, der Partikel- und der Kohlenwasserstoffemissionen. Zur Verringerung der letzteren Emissionen ist es möglich, als Katalysator (4) eine Kombination aus einem Stickoxidkatalysator und einem nachgeschalteten Oxidationskatalysator einzusetzen.

Um ein Umschalten der Motorelektronikregelung (6) von einer normalen auf eine verspätete Kraftstoffeinspritzung zu gewährleisten, sobald kein Reduktionsmittel mehr im Speichertank (5) vorhanden ist, ist dem Speichertank (5) ein Füllstandsensor (9) zugeordnet, der mittels einer Signalleitung (14) an die zentrale Steuereinheit (10) angeschlossen ist. Der Füllstandsensor (9) übermittelt der zentralen Steuereinheit (10) bei Erreichen eines minimalen Füllstandes im Speichertank (5) ein Signal, worauf die zentrale Steuereinheit (10) über eine Steuerleitung (15) ein Steuersignal zur Umschaltung der Motorelektronikregelung (6) auf eine verspätete Kraftstoffeinspritzung zuleitet. Sobald der Speichertank (5) erneut mit Reduktionsmittel aufgefüllt ist, gibt der Füllstandsensor (9) über die Signalleitung (14) ein entsprechendes Signal an die zentrale Steuereinheit (10), die daraufhin über die Steuerleitung (15) die Motorelektronikregelung (6) derart ansteuert, daß eine erneute Umschaltung von der verspäteten zu der zuvor eingestellten normalen Kraftstoffeinspritzung erfolgt. Bei dem beschriebenen Abgasreinigungssystem wird daher in allen Fällen eine Reduzierung der Stickoxyde im Abgasstrom erzielt, wobei diese Reduzierung entweder durch eine Nachbehandlung in Form einer Zugabe von Reduktionsmittel oder durch eine innermotorische Stickoxydverminderung aufgrund verspäteter Kraftstoffzufuhr erreicht wird. Um dem Fahrer des Kraftfahrzeugs das Fehlen von Reduktionsmittel im Speichertank (5) sichtbar zu machen, ist im Bereich der Armaturentafel des Kraftfahrzeugs eine Sichtanzeige (17) vorgesehen, die mittels einer gestrichelten Leitung (16) von der zentralen Steuereinheit (10) abhängig von dem jeweils übermittelten Signal des Füllstandsensors (9) aktiviert wird.

Durch die beschriebene einfache Überwachung des Reduktionsmitteltankes läßt sich der Bauteileaufwand verringern, indem der Dieselmotor durch Softwaremaßnahmen die gesetzlich geforderten Abgas-Grenzwerte innermotorisch einhalten kann.

Um den erhöhten Kraftstoffverbrauch zeitlich zu beschränken, muß das Nachfüllen des Reduktionsmitteltankes vom Betreiber so rasch wie möglich erfolgen. Durch die Sichtanzeige (17) wird der Betreiber des Kraftfahrzeugs auf das fehlende Reduktionsmittel hingewiesen. Sollte er die Notwendigkeit eines nachzufüllenden Reduktionsmitteltankes über einen längeren Zeitraum ignorieren, so kommt eine weitere erfindungsgemäße Ausgestaltung zur Geltung. Ein an den Füllstandssensor gekoppelter Zeitschalter ist nämlich derart an die Motorelektronik gekoppelt, daß ein Betrieb des Kraftfahrzeugs ohne Reduktionsmittel lediglich über einen begrenzten Zeitraum ermöglicht wird. Nach Ablauf der vorgegebenen Zeitspanne ohne eine Nachfüllung wird die Motorelektronik blockiert, so daß ein weiterer Betrieb des Kraftfahrzeugs verhindert wird.

## Patentansprüche

1. Abgasreinigungssystem mit einem mittels einer Motorelektronik regelbaren Dieselmotor, mit einer Einrichtung zur Nachbehandlung der Abgase mit Hilfe einer Zugabevorrichtung von Reduktionsmittel, das in einem Speichertank gespeichert ist,
**dadurch gekennzeichnet,**
daß Mittel (9) zum Erfassen des Füllstandes des Speichertanks (5) vorgesehen sind, die an eine Steuereinrichtung (10) angeschlossen sind, die bei leerem Speichertank (5) die Regelung der Motorelektronik (6) derart ändert, daß eine späte Kraftstoffeinspritzung erfolgt.

2. Abgasreinigungssystem nach Anspruch 1,
**dadurch gekennzeichnet,**
daß eine Sichtanzeige (17) zum Erkennen eines leeren Speichertanks (5) vorgesehen ist.

3. Verfahren zur Reinigung der Abgase eines mittels einer Kraftstoffzufuhr steuerbaren Dieselmotors, wobei Stickoxyde der Abgase mittels einer Zugabe von Reduktionsmittel aus einem Speichertank reduziert werden,
**dadurch gekennzeichnet,**
daß Kraftstoff verspätet eingespritzt wird, sobald kein Reduktionsmittel mehr vorhanden ist.

## Claims

1. Exhaust-gas purification system with a diesel engine which can be regulated by means of engine electronics, with an arrangement for the aftertreatment of the exhaust gases by means of a device for the addition of reducing agent which is stored in a storage tank, characterized in that there are provided means (9) for recording the filling level of the storage tank (5) which are connected to a control device (10) which, when the storage tank (5) is empty, changes the regulation of the engine electronics (6) in such a way that late fuel injection occurs.

2. Exhaust-gas purification system according to Claim 1, characterized in that a visual display (17) for detecting an empty storage tank (5) is provided.

3. Method for purifying the exhaust gases of a diesel engine which can be controlled by means of a fuel supply, nitric oxides of the exhaust gases being reduced by means of an addition of reducing agent from a storage tank, characterized in that fuel is injected late as soon as there is no longer any reducing agent.

## Revendications

1. Système d'épuration des gaz d'échappement avec un moteur Diesel réglable au moyen d'une électronique de moteur, comportant un appareil de post-traitement des gaz d'échappement à l'aide d'un dispositif d'apport d'un réducteur qui est stocké dans un réservoir,
caractérisé
par le fait que, pour saisir l'état de remplissage du réservoir (5) sont prévus des moyens (9) qui sont reliés à un appareil de commande (10) qui, lorsque le réservoir (5) est vide, modifie le réglage de l'électronique (6) du moteur de façon qu'il se fasse une injection retardée du carburant.

2. Système d'épuration des gaz d'échappement selon la revendication 1,
caractérisé
par le fait qu'un indicateur visuel (17) est prévu pour faire savoir que le réservoir (5) est vide.

3. Procédé d'épuration des gaz d'échappement d'un moteur Diesel pouvant se commander au moyen d'une amenée de carburant, des monoxydes d'azote des gaz d'échappement étant réduits au moyen d'un apport d'un réducteur provenant d'un réservoir,
caractérisé par le fait que l'on injecte le carburant de façon retardée dès qu'il n'y a plus de réducteur.
